# EUROPÄISCHE PATENTANMELDUNG

(11) **EP 0 707 395 A1**
(43) Veröffentlichungstag der Anmeldung: **17.04.1996**
(21) Anmeldenummer: 95114030.0
(22) Anmeldetag: 07.09.1995
(51) Int. Cl.: H04L 12/413, H04B 10/22

(54) **Verfahren und Einrichtung zur Informationsübertragung**

(30) Priorität: 10.10.1994 CH 3038/94
(71) Anmelder: ROYALE CONSULTANTS Ltd., Dublin 2 (IE)
(72) Erfinder: Gut, Max B., Dipl.-Ing., CH-6353 Weggis (CH)
(74) Vertreter: Hotz, Klaus, Dipl.-El.-Ing./ETH Patentanwalt

(57) **Zusammenfassung**

Die Erfindung betrifft ein Verfahren und eine Einrichtung zur Informationsübertragung zwischen im uni- und bidirektionalen Verkehr miteinander kommunizierende Kommunikationspartnern (**KP1, KP2...KP9**). Dabei stellt der Raum (**30**) eine Kommunikationsebene dar, in welchem die räumliche Anordnung durch Zwischenwände (**31, 32, 38** und **39**) begrenzt ist. Dadurch entstehen verschiedene einander überlappende Bereiche (**34, 35, 36, 37**) in welchen sich unterschiedliche Sende- und Empfangsverhältnisse zwischen den einzelnen Kommunikationspartnern ergeben.
Es werden nun Wege aufgezeigt, wie durch Anordnung der zu übertragenden Information in Bitzellen, erreicht werden kann, dass unabhängig von der Informationsquelle eine eindeutige Identifikation der Information erzielbar ist.

## Beschreibung

Die Erfindung betrifft ein Verfahren und eine Einrichtung zur Informationsübertragung, wobei die Informationsübertragung zwischen Kommunikationspartnern durchgeführt wird, die je wenigstens einen Sender aufweisen, und wobei die Informationen bitseriell übertragen werden und die Richtung der Informationsflüsse teilweise umschaltbar ist.

Mittels solcher Verfahren kann zwischen Kommunikationspartnern -wie beispielsweise Computern und Druckern- oder anderen intelligenten elektronischen Systemen, die nicht über Kabel miteinander verbunden sind, eine bidirektionale Informationsübertragung durchgeführt werden, wobei Infrarotlicht oder Funk als Übertragungsmedium angewendet werden kann. Derartige Verfahren können auch im Zusammenhang mit Kommunikationsnetzwerken eingesetzt werden, wobei zwischen Kommunikationspartnern, die über Leiter im Netzwerk verbunden sind und solchen, die nicht über Leiter am Netzwerk angeschlossen sind, Informationen ausgetauscht werden können.

Bei der Kommunikation in Netzwerken mit mehreren Teilnehmern muss sich das Netzwerk selbst automatisch verwalten, d.h. es muss festgelegt werden, welche Teilnehmer zu welchen Zeitpunkten aufgrund von welchen Kriterien miteinander kommunizieren können. Die Gesamtheit der Regeln und Vereinbarungen für die Verwaltung eines Netzwerkes und die automatische Durchführung eines geordneten Informationsaustausches zwischen den Kommunikationspartnern ist das Protokoll. Bei komplexeren Netzwerkverwaltungen basiert das Protokoll auf einer dezentralen Verwaltung, bei der jeder Teilnehmer "master" sein kann und einen Teil der Verwaltung übernimmt. Anhand des Protokolles wird festgelegt, wie ein Teilnehmer das Netzwerk zu benutzen und wieder freizugeben hat.

Bekannte Protokolle für solche Netzwerke sind das CSMA-Protokoll ("carrier sense, multiple access). Damit ein solches CSMA-Protokoll verwirklich werden kann, müssen zumindest folgende Voraussetzungen erfüllt sein:
- Masterfähigkeit: Jeder Teilnehmer muss fähig sein, eigenständig aufgrund seines Übermittlungsbedarfes das Übertragungsmedium zu aquirieren.
- Mithörfähigkeit: Jeder Teilnehmer muss fähig sein, den Verkehr auf dem Netzwerk zu beobachten und als Kriterium für die Aquisition des Netzwerkes zu verwenden. Charakteristisch bei einem Netzwerk mit elektrischen Leitern mit Busstruktur ist die Tatsache, dass alle Busteilnehmer quasi gleichzeitig jede auf dem Bus übertragene Information mithören können (z.B. durch "wired or"-Verknüpfung der Ausgangsstufen).
- Unterbrechbarkeit: Jeder Teilnehmer (Station) muss feststellen können, ob während der Benützung des Netzwerkes ein anderer Teilnehmer das Netzwerk ebenfalls benützt, um in einem solchen Falle seine Übertragung sofort stoppen zu können.
- Bidirektionalität des Mediums: Das Übertragungsmedium muss fähig sein, Informationen bidirektional zu übermitteln.
- Gleichzeitigkeit: Übertragungsmedium und Kommunikationspartner müssen derart ausgestaltet sein, dass die gleichzeitige Benutzung des Übertragungskanals durch mehrere Kommunikationspartner (Stationen) möglich ist. Dies bedeutet u.a., dass bei einem Netzwerk mit elektrischen Leitern mit Busstruktur die Verwendung von Push-Pull-Ausgangsstufen nicht möglich wäre.

Die genannten Voraussetzungen implizieren vordergründig, dass die Stationen während dem Senden empfangsfähig bleiben müssen. In nicht leitungsgebundenen Netzwerken z.B. auf Infrarot und/oder Funk basierenden Netzwerken sind diese Voraussetzungen nicht vollständig erfüllt.

Es ist nun ein Verfahren bekannt, dass trotzdem die Implementation eines CSMA-Protokolles ermöglicht, selbst wenn der Kommunikationspartner (Station) während des Sendens nicht empfangsfähig ist (**EP-A1-0 609 178; Royale Consultants Ltd.**).
Dieses Verfahren beruht auf einem Time Multiplex. Beabsichtigt also ein Kommunikationspartner (Station) eine Information über das nicht leitungsgebundene Übertragungsmedium zu übertragen, so kennzeichnet sich diese Station -falls sie bis zu diesem Zeitpunkt selbst noch kein Bit empfangen hat (CS:= carrier sense)-als initiierende Station und eine, die an sich keinen Übertragungsbedarf hat und jetzt ein Bit von einer initiierenden Station empfangen hat, als empfangende Station. Während der Informations-Übertragung markiert die initiiernde Station im zu übermittelnden Datenfluss die Information als von einer initiierenden Station kommend. Die empfangende Station sendet ihrerseits ein empfangenes Bit unmittelbar (jedenfalls vor dem Aussenden des nächsten Bits durch die initiierende Station) zur initiierenden Station zurück und markiert in diesem Datenrückfluss die Information als von einer empfangenden Station kommend. Nach Beendigung der Übermittlung oder nach Beendigung eines Charakters heben die Stationen ihre Kennzeichnung als initiierende beziehungsweise empfangende Station wieder auf.

Durch das bitweise Rücksenden der Information von der empfangenden Station oder den empfangenden Stationen zur initiierenden Station ist es letzterer möglich zu überprüfen ob die Information richtig bei den Empfängern angekommen ist, oder ob eine gleichzeitig mit der Informationsübermittlung beginnende andere initiierende Station den Informationsfluss verfälscht hat (CD:=collision detection) oder sonst ein Übertragungsfehler vorhanden ist. Sie kann damit entsprechend dem CSMA Protokoll vorgesehene Massnahmen (z.B. Neustart der Übermittlung -MA:=multiple access-, wenn das Medium wieder frei ist) einleiten.

Mit diesem Verfahren können also mobile Kommunikationsteilnehmer (Stationen) beziehungsweise Netzwerkteilnehmer -z.B. über Infrarot oder Funk- sehr gut in bestehende leitungsgebundene Netzwerke eingebunden werden.
Es wird hingegen als nachteilig angesehen, dass sich alle Teilnehmer an dieses Protokoll halten müssen. Dies setzt nun aber voraus, dass jeder Teilnehmer neben neben einer Sendeeinrichtung zur Implementation des Carrier sense Mechanismus auch einen hardwaremässig aufgebauten Empfangsteil besitzen muss, was mit erheblichem Aufwand verbunden ist.

Zudem benötigt das Betreiben solcher Emfangsteile zusätzliche Engergie und belastet die zur Verfügung zu stellenden Platzverhältnisse. Es gibt nämlich eine ganze Reihe von Anwendungsbeispielen, bei denen ein solcher Aufwand sich weder kosten- noch platzmässig rechtfertigt (z.B.IR Fernsteuerungen für TV Apparate oder ähnliches).
Typisch für solche Anwendungen ist zudem, dass die Informations-Übertragung eine maximale zeitliche Länge aufweist, dass die Übertragungen verhältnismässig selten auftreten und bezüglich ihres zeitlichen Erscheinens in Relation zum -nach dem CSMA-Protokoll geregelten Datenaustausch- unbestimmt sind.

Es ist daher Aufgabe der vorliegenden Erfindung, die Nachteile des Standes der Technik zu vermeiden und ein Verfahren und eine Einrichtung aufzuzeigen, bei welcher neben den herkömmlichen Stationen (die Verbindungen aufbauen können, die dem **CSMA** genügen), auch Stationen, die Informationen in das Netzwerk einspeisen können, die dem **CSMA-Protokoll** nicht genügen, da ihnen die Empfangseinrichtung fehlt, betreibbar sind.

Gemäss dem erfindungsgemässen Verfahren und der entsprechenden Einrichtung besteht die Lösung in den kennzeichnenden Merkmalen der Ansprüche **1** und **13**.

Im folgenden wird die Erfindung anhand eines Ausführungsbeispieles und prinzipiellen Darstellungen im Zusammenhang mit den Zeichnungen näher erläutert. Es zeigen:
- **Fig. 1**: eine Prinzipdarstellung der Struktur eines Kommunikationsnetzwerkes für die Steuerungstechnik,
- **Fig. 2**: ein Diagramm der Zugriffszeitpunkte mehrerer Stationen auf einen Bus des Kommunikationsnetzwerkes der **Fig. 1**,
- **Fig. 3**: eine Darstellung der Sende- und Empfangsverhältnisse mehrerer in einem Raum befindlicher Kommunikationspartner,
- **Fig. 4**: ein Schaltbild zweier im Halbduplex-Verkehr kommunizierender Sende-/Empfangsstationen,
- **Fig. 5**: eine schematische Darstellung einer asynchronen Daten-Übertragung,
- **Fig. 6a**: eine schematische Darstellung einer Pulsburst-Positions-Modulation,
- **Fig. 6b**: eine schematische Darstellung einer Puls-Positions-Modulation,
- **Fig. 7a**: eine Kanal-Verteilung in einer Bitzelle in Prinzipdarstellung
- **Fig. 7b**: die Kanal-Verteilung in einer Bitzelle gemäss Ausführungsbeispiel aus **Fig. 3**
- **Fig. 8a**: eine erfindungsgemässe Kodierung für Daten einer CSMA-Verbindung
- **Fig. 8b**: eine erfindungsgemässe Kodierung für Daten einer **UKP-**Verbindung
- **Fig. 9**: eine Darstellung der Kanalbelegung bei der **UKP** Verbindung
- **Fig. 10**: ein Kombinationstest-Blatt mit einem Beweis für die arbeitsfähigkeit des erfindungsgemässen Systems
- **Fig. 11**: ein Beispiel einer Sende-Einrichtung einer **UKP** Station
- **Fig. 12**: ein Detail aus der Sende-Einrichtung gemäss **Fig. 10**
- **Fig. 13**: eine erste Empfangseinrichtung mit Decodiermöglichkeit für einkommende Protokolle gemäss **CSMA** und/oder **UKP-Mode**.
- **Fig. 14**: eine zweite Empfangseinrichtung mit Decodiermöglichkeit für einkommende Protokolle gemäss **CSMA** und/oder **UKP-Mode**.
- **Fig. 15**: eine Prinzipdarstellung eines gleichzeitigen Informationsaustauschs einer **CSMA-** und einer **UKP-Verbindung**.
- **Fig. 16**: eine Prinzipdarstellung eines gleichzeitigen Informationsaustauschs zweier **CSMA-**Verbindungen ohne Berücksichtigung einer **UKP-Verbindung**.

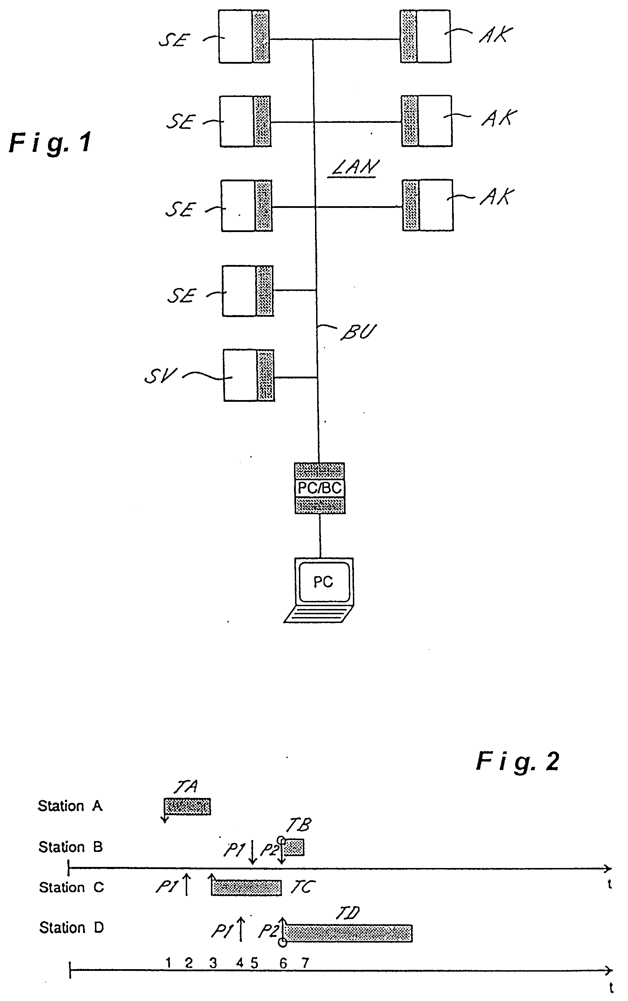

In der **Fig. 1** sind mit **SE** Sensoren und mit **AK** Aktuatoren bezeichnet, die beispielweise intelligente, elektronische Systeme sein können. Die Sensoren **SE** und die Aktuatoren **AK** sind über einen Bus **BU** eines Kommunikationsnetzwerkes **LAN** miteinander verbunden, über welchen Informationen Bit-seriell in Form von Telegrammen übertragen werden. Da im gewählten Beispiel die Telegramme von den Sensoren abgesandt und von den Aktuatoren empfangen werden, werden nachfolgend auch die Bezeichnungen *Telegrammabsender* und *Telegrammempfänger* verwendet. Eine den Telegrammverkehr im gesamten Netzwerk **LAN** ständig abhörende zentrale Überwachungseinrichtung **SV**, auch *Supervisor* genannt, ist dabei am Bus **BU** angeschlossen. Im Supervisor **SV** sind Daten in Form einer Tabelle gespeichert, mittels denen der Supervisor **SV** unter Verwendung eines Teiles eines gesandten Telegrammes die Zugriffsberechtigung des Telegrammabsenders auf einen Telegrammempfänger überprüfen kann. Mit **PC** ist ein universelles Bedienungsgerät bezeichnet, das über einen Buskoppler **PC/BC** mit dem Bus **BU** in Verbindung steht, und das jede Art von Information in das **LAN** einspeisen und auch dort empfangen kann.

Solche Konstellationen gehören zum Stand der Technik und sind näher in der **EP-A1 0 570 338** beschrieben und erläutert und werden auch bei der vorliegenden Anwendung verwendet.

Gemäss **Fig. 2** sind mit **TA**, **TB**, **TC** und **TD** Telegramme bezeichnet, die von den Stationen **A**, **B**, **C** und **D** ausgesandt werden. Bei leitungsgebundenen Bussystemen bedient man sich häufig des **CSMA-**(carrier sense, multiple acces)-Protokolls zur Regelung des Datenaustausches. Mit derartigen Programmen wird sichergestellt, dass Telegramme nur zeitlich gestaffelt, also ohne gegenseitige Überlagerung und Störung, übertragen werden können.
Beabsichtigt bei diesem Protokoll eine Station (Kommunikationspartner) **A** ein Telegramm **TA** zu übermitteln, so hört sie vorerst auf den Bus **BU** (siehe **Fig. 1**) und stellt fest, dass der Bus **BU** durch eine andere Übertragung bereits belegt ist (Zeitpunkt t=1) (**CS**:=carrier sense). Stellt sie fest, dass der Bus **BU** frei ist, so sendet sie ihr Telegramm **TA**. Ist der Bus hingegen belegt, will also eine Station **C** ebenfalls ein Telegramm **TC** gleichzeitig mit Station **A** über den Bus **BU** übermitteln, so stellt diese fest, dass der Bus **BU** belegt ist (Zeitpunkt t=2). Somit wartet Station **C** mit der Übermittlung bis der Bus **BU** wieder frei ist (Zeitpunkt t =3). Beabsichtigen nun mehrere Stationen **D** und **B** während die Übermittlung eines Telegrammes **TC** durch eine andere Station **C** im Gange ist, selbst ein Telegramm **TD** und **TB** (Zeitpunkt t=4; Zeitpunkt t=5) zu senden, so wird ihr (zunächst verhinderter) späterer Zugriffsversuch durch die Freigabe des Busses **BU** (Zeitpunkt t=6) quasi synchronisiert: Beide Stationen hören auf dem Kanal des Busses **BU** nichts mehr und beginnen somit gleichzeitig mit dem Senden der entsprechenden Telegramme **TD** und **TB** (Zeitpunkt t=6). Während dem Aussenden der Telegramme **TD** und **TB** hören aber beide Stationen mit und stellen somit fest, ob die Information, die sie hören, mit der ausgesandten übereinstimmt. Sobald das Gehörte nicht mehr mit dem Ausgesandten übereinstimmt, wird die Sendung beendet. Ein neuer Zugriff wird erst wieder versucht, wenn der Bus **BU** wieder frei ist (Zeitpunkt t=7; Busteilnehmer **B**) **-MA**:=multiple access-

Wird durch das Netzwerk sichergestellt, dass gleichzeitig mehrere Stationen (Kommunikationspartner) störungsfrei senden können (z.B. durch *wired or*-Verknüpfung auf dem elektrischen Leiter), so wird die eine Station (Station **D**; Zeitpunkt t=7) nicht feststellen können, dass weitere Stationen (Station **B**; Zeitdauer t=6-7) gleichzeitig -aber das Gleiche- gesendet haben. Station **D** wird mit der Telegrammübermittlung daher unbeschadet weiterfahren (**CA**:=collision avoidance). Damit hatte faktisch Station **D** gegenüber dem Busteilnehmer **B** eine höhere Priorität. Wird also die senderseitige Adresse als erstes innerhalb eines Telegrammes ausgesandt, so kann aufgrund der Busteilnehmeradresse die Priorität verteilt und bestimmt werden.

Ein solche Art von Protokoll gehört ebenfalls zum Stand der Technik und ist in der **EP-A1 0 570 338** beschrieben und erläutert und wird auch bei der vorliegenden Anwendung verwendet.

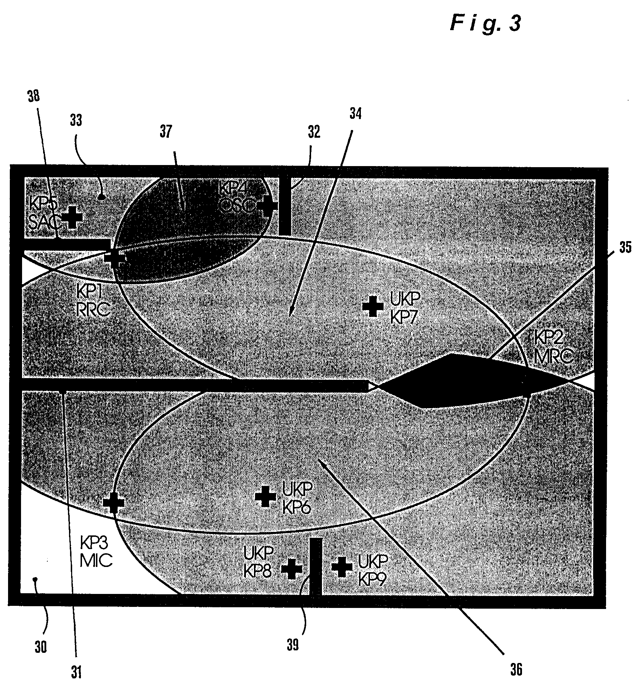

Die **Fig. 3** dient zur Erläuterung des "Raum-Problems" im Falle drahtloser Nahverbindung zwischen mehreren Kommunikationspartnern. Gemäss dieser Figur sei ein Raum **30** mit einer nicht durchgehenden ersten Zwischenwand **31**, einer zweiten nicht durchgehenden Zwischenwand **32**, einer dritten nicht durchgehenden Zwischenwand **38** und einer vierten nicht durchgehenden Zwischenwand **39** verbunden, in dem sich mehrere Kommunikationspartner **KP1**, **KP2**, **KP6** und **KP7** befinden. Zwei weitere Kommunikationspartner **KP4** und **KP5** befinden sich in einem durch die nicht durchgehenden zweiten und dritten Zwischenwände **32** und **38** abgeteilten weiteren Raum **33**. Der erste und der siebte Kommunikationspartner **KP1** und **KP7** und der dritte und der sechste Kommunikationspartner **KP3** und **KP6** sind durch die erste Zwischenwand **31** getrennt, während der zweite Kommunikationspartner **KP2** eine Position einnimmt, die etwa auf der Verlängerungsgeraden der Zwischenwand **31** liegen möge. Bei dieser Anordnung ergibt sich für Sende- und Empfangsverhältnisse ein erster, zweiter, dritter und vierter überlappender Bereich **34**, **35**, **36** und **37**, wobei im zweiten Bereich **35** eine Überlappung zwischen den Kommunikationspartnern **KP1**, **KP3** und **KP2** stattfindet und im ersten Bereich **34** eine solche aus den Kommunikationspartnern **KP1** und **KP2**, sowie im dritten Bereich **36** eine Überlappung der Kommunikationspartner **KP2** und **KP3** erfolgt. Bleibt noch der vierte Bereich **37**, in welchem eine Überlappung der Kommunikationspartner **KP1** und **KP4** erfolgt.
Zwei weitere Kommunikationspartner **KP8** und **KP9** sind durch die vierte nicht durchgehende Zwischenwand **39** getrennt, sodass der achte Kommunikationspartner **KP8** im Empfangsbereich des dritten und des sechsten Kommunikationspartners **KP3** und **KP6** liegt, während der neunte Kommunikationspartner **KP9** im Empfangsbereich des zweiten Kommunikationspartners **KP2** liegt.

Zu dieser Konfiguration kann entsprechend seiner Rolle, die der Kommunikationspartner **KP** im aktuellen Informationsaustausch spielt und entsprechend seiner Position im Raum jedem Kommunikationspartner **KP** ein bestimmter Zustand zugewiesen werden.

Es sei nun angenommen, dass der dritte Kommunikationspartner **KP3** ein initiierender Kommunikationspartner **IKP** ist und somit ein Startbit -gemäss nachfolgend beschriebenen entsprechendem Mustergeneriert und aussendet. Der Partner verhält sich dadurch wie ein **MIC** (message initiating communicator), d.h. derjenige **KP** der *Quelle* der nach den Regeln des **CSMA**-Protokolls zu transferierenden Information ist. Da im gemeinsamen dritten Bereich **36** liegend, empfängt der zweite Kommunikationspartner **KP2** als **EKP** bzw. **MRC** (message receiving communicator), d.h. derjenige **KP** der *Senke* der nach den Regeln des **CSMA-Protokolls** zu transferierenden Information ist, die Information. Der erste Kommunikationspartner **KP1** verhält sich in diesem Beispiel als antwort-empfangender Kommunikationspartner **AKP** beziehungsweise als **RRC** (response receiving communicator), d.h. er ist ein Kommunikationspartner **KP**, der zwar einen **EKP**, nicht aber einen **IKP** empfangen kann.

Bei diesem Beispiel müssen aber noch andere Kommunikationspartner **KP** berücksichtigt werden: Beispielsweise ein **OKP** ("offside" -abseits stehender Kommunikationspartner **KP**), ein sogenannter **OSC** (offside communicator), d.h. er ist ein Kommunikationspartner **KP**, der weder den derzeitigen **IKP** noch den derzeitigen **EKP** empfangen kann, durchaus aber einen **AKP** empfangen könnte. Zudem repräsentiert der fünfte Kommunikationspartner **KP5** in diesem Beispiel einen sogenannten **SKP** ("stand alone" Kommunikationspartner **KP**) beziehungsweise einen **SAC** (stand alone communicator), d.h. dies ist ein Kommunikationspartner, der nur Information von einem **OKP** empfangen könnte.

Zusätzlich zu diesen gemäss den Regeln des **CSMA-Protokolls** im bidirektionalen Verkehr arbeitenden Kommunikationspartner **KP** sind nun aber auch im undirektionalen Verkehr arbeitende Kommunikationspartner **KP** sogenannte **UKP's** zu berücksichtigen. Ein solcher **UDC** (unidirectional communicator) ist ein Kommunikationspartner **KP6**, **KP7**, **KP8** und **KP9**, der keine Empfangseinrichtung aufweist, trotzdem aber in der Lage sein muss, Informationen in das Netzwerk einzubringen.

Bei der zuvor geschilderten beispielsweisen Funktionsweise ist nun ein wesentliches Problem zu lösen, das nicht unerheblich und unter dem Namen "Hidden Terminal Problem" bekannt ist.
Dies entsteht dadurch, dass ein Informationsempfänger **EKP** durch einen anderen Kommunikationspartner **KP** einem **AKP** während dem Empfang der Information von einem sendenden Kommunikationspartner **KP** einem **IKP** gestört werden kann, da dieser **AKP** von der Existenz der aktuellen Informationsübermittlung vom **IKP** zum **EKP** nichts weiss.

Das nachfolgend beschriebene erfindungsgemässe Verfahren und die entsprechende Einrichtung setzen die folgenden Definitionen als feststehend voraus:
- Eine reine bidirektionale **CSMA** Verbindung ist eine Verbindung, die entsprechend den CSMA-Protokoll Regeln durch Stationen durchgeführt wird, die Mittel zum Senden und Empfangen aufweisen.
- Eine reine unidirektionale **UKP** Verbindung ist eine Verbindung, bei der bis auf eine Station alle anderen Stationen entsprechend dem **CSMA-Protokoll Regeln** reagieren können und damit auch senden und empfangen können, während die eine unidirektionale Station nur senden, nicht aber empfangen kann. Bei reinen **UKP** Verbindungen besteht aktuell kein Kommunikationsbedarf zwischen vorhanden **CSMA**-Kommunikationspartnern. Der unidirektionale Datenfluss die einzige aktuell zu übertragende Information.
- Eine Simultan-Verbindung ist eine Verbindung, bei der während einer **CSMA**-Verbindung ein **UKP** aktiv wird und zeitlich nicht zur CSMA-Verbindung synchronisiert eine Information gleichzeitig mit der CSMA-Information übermittelt.
- Unter einem Bit wird ein orginäres Bit eines Datencharakters nach dem asynchronen Datenübertragungs-Prinzip verstanden. Dieses Bit kann während der Übertragung z.B. aus Redundanzgründen durch mehrere einzelne Pulse oder Pulsbursts dargestellt sein.

Die nachfolgend beschriebenen Regeln werden jeweils eingehalten:
- Bei einer reinen **CSMA**-Verbindung antwortet der **EKP** entsprechend den CSMA-Protokoll Regeln.
- Bei einer reinen **UKP**-Verbindung antwortet jeder Kommunikationspartner als **EKP** und sendet seine Information entsprechend den CSMA-Protokoll Regeln zurück. Dadurch wird das Übertragungsmedium als besetzt markiert.
- Bei einer Simultan-Verbindung reagiert jeder Kommunikationspartner **KP** entsprechend den CSMA-Protokoll Regeln für die CSMA-Verbindung, speichert aber gleichzeitig den UKP-Datenfluss zur späteren Übermittlung entsprechend den CSMA-Protokoll Regeln ab.

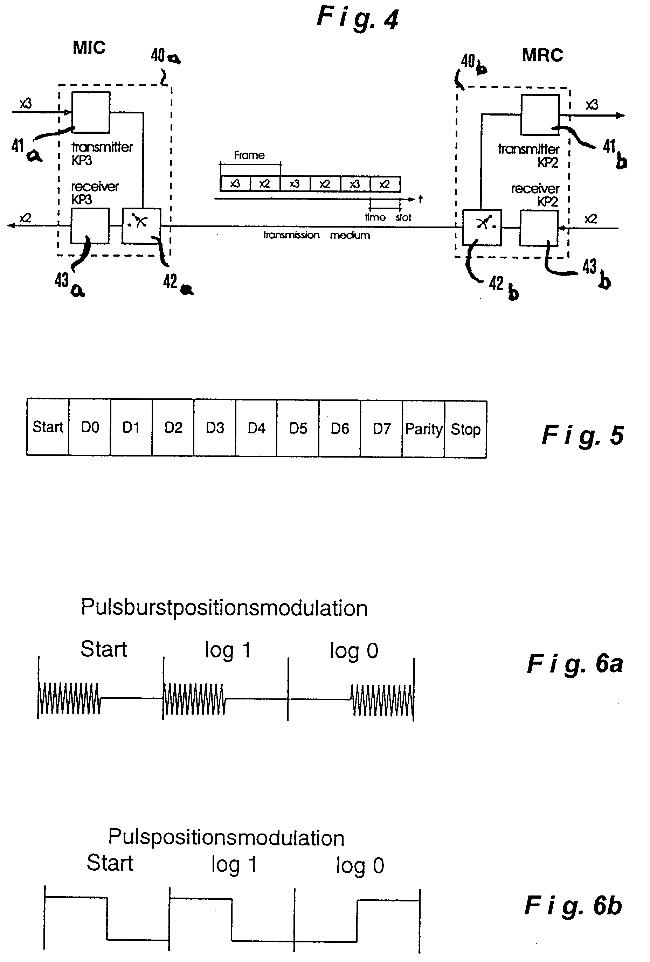

In **Fig. 4** ist ein schnell umschaltbares Halbduplex-System gezeigt bei dem eine **MIC** (message initiating communicator) Station **40a** mit einer **MRC** (message receiving communicator) Station **40b** in Verbindung stehen. Jede der Stationen umfasst je einen Sender **41a** und **41b** und je einen Empfänger **43a** und **43b** sowie je einen Schalter **42a** und **42b**.
Ausser wenn aktuell gesendet wird, wie im vorliegenden Fall -im nach **Fig. 3** gewählten Beispiel zwischen dem Kommunikationspartner **KP3** und **KP2**- liegen die Schalter **42a** und **42b** immer in Empfangsstellung.

Wie schon vorerwähnt, wird eine asynchrone Datenübertragung -wie in **Fig. 5** gezeigt- gewählt, wobei über die 8 Kanäle **D0** bis **D7** Information gepackt ist, jeweils ein Startbit voraus und ein Parity- und ein Stopbit als Abschluss.

Die Daten werden beim erfindungsgemässen Verfahren grundsätzlich, schon aus physikalischen Leistungsüberlegungen, -wie in **Fig. 6a** gezeigt- Pulsburst-Positions-Modulation moduliert. Sie können falls keine keine hohen Anforderungen an die Störungsimmunität gestellt werden -wie in **Fig. 6b** gezeigte in einfacher Puls-Positions-Modulation übertragen werden.

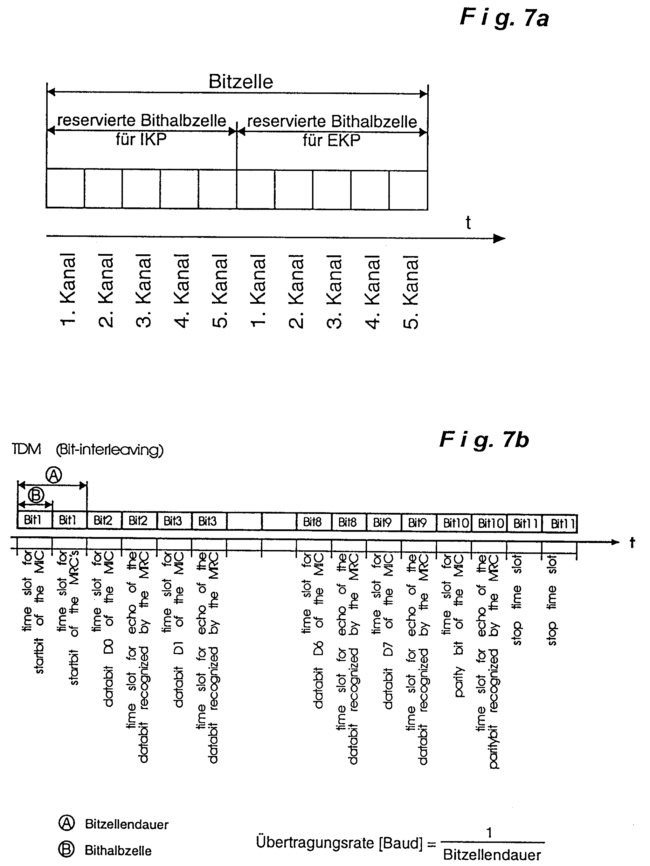

Wie schon zuvor erwähnt, schaltet die Station (**Fig. 4**) nach dem Aussenden eines jeden Impulses unmittelbar auf Empfang um. Zudem bewirkt das Senden eines Bits durch einen **IKP** das alle **EKP's** die Information zum **IKP** zurücksenden. Das ergibt die zeitliche Aufteilung für einen zu übermittelnden Charakter wie in **Fig. 7a und Fig. 7b** dargestellt.
Während einer Bitzellendauer sendet damit der **IKP** einerseits ein Bit zu den **EKP's** (erste Bithalbzelle) und empfängt andererseits anschliessend die Antworten der **EKP's** in der zweiten Bithalbzelle. Zur eigentlichen Signaldarstellung wird dazu jede Bithalbzelle in 5 Kanäle aufgeteilt. **-Fig. 7a-**

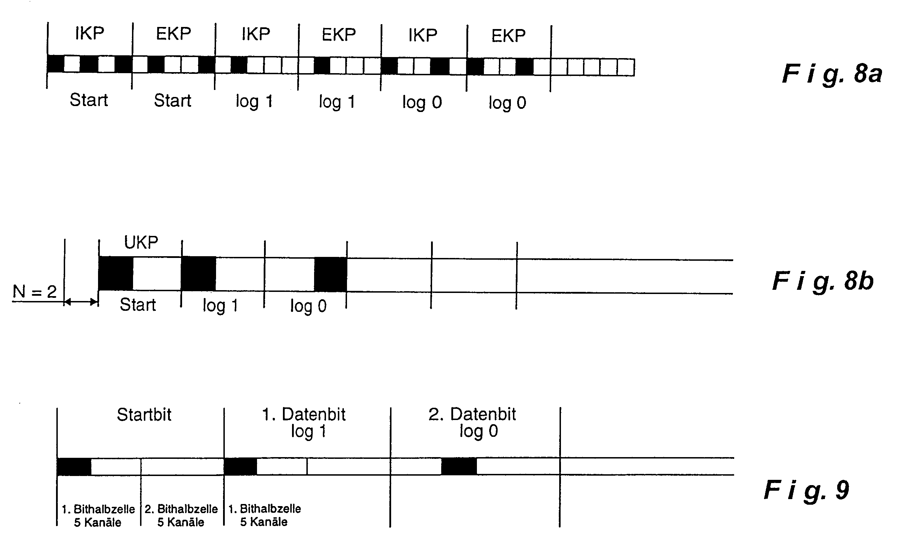

Bei der erfindungsgemässen Übermittlung wird für die bidirektionelle Daten eine Darstellung wie in **Fig. 8a** gezeigt gewählt. Dabei wird eine im **CSMA-Mode** zu übermittelnde logische 1 durch einen Puls im 2. Kanal, eine logische 0 durch einen Puls im 1. und im 4. Kanal, sofern die ausgesandte Information von einem **IKP** kommt, dargestellt. Der **IKP** charakterisiert sein Startbit duch je einen Puls in den Kanälen 1, 3 und 5. Der **EKP** quittiert die Information der logischen 1 mit einem Bit, das -übrigens dem des **IKP's** entspricht- charakterisiert durch einen Puls im 2. Kanal, eine logische 0 hingegen durch Pulse in den Kanälen 1 und 4, ebenfalls gleich wie der **IKP** und charakterisiert sein Startbit durch je einen Puls im 2. und 5. Kanal.

Wie ebenfalls schon erwähnt, ist der Kommunikationspartner nur während des Aussendens der Pulse in den entsprechenden Kanälen nicht empfangsfähig.

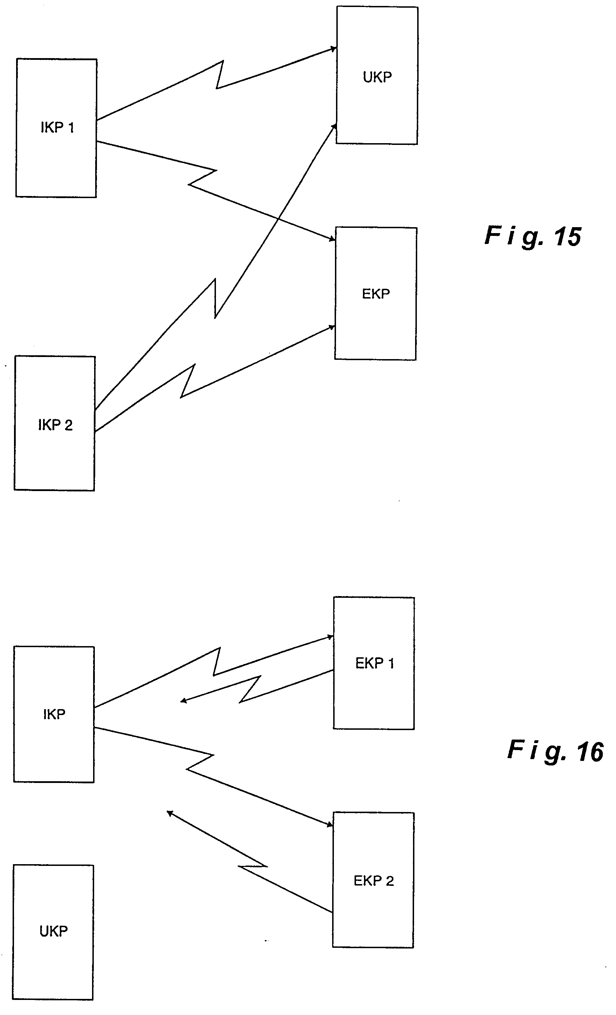

Der sogenannte Arbitration-Mode, bei dem über gleichzeitig ankommende Information entschieden wird, wird anhand der folgenden Figuren **15** und **16** erläutert.

In **Fig. 8b** wird gezeigt wie die Darstellung der empfangenen und/oder ausgesendeten Information für den **UKP-**Mode kodiert wird. Dabei ist allgemein wichtig zu beachten, dass die Modulationsdauer immer doppelt so lange ist, wie im **CSMA-**Mode. Ein Start- bzw. eine logische 1 wird dabei als jeweils einen Puls in den Kanälen 1 und 2 charakterisiert und eine logische 0 als ein solches mit Pulsen in den Kanälen 4 und 5.

**Fig. 9** zeigt die Kanalbelegung bei der Übertragung von Startbit, logisch 1 und logisch 0 im **UKP**-Mode. Dabei bestehen die Bithalbzellen wiederum aus je fünf Kanälen, wobei einzelne durch Pulse beaufschlagt sind, je nachdem welche Information übertragen wird.

Dank der vorteilhaften Pulsburstmodulation kann der **IKP** in der zweiten Bithalbzelle mehrere **EKP's** gleichzeitig empfangen. Dadurch ist es möglich das CSMA-Protokoll zu implementieren.

Innerhalb der Startbithalbzelle für den **IKP** markiert somit der **IKP**, dass diese Information von einem **IKP** ausgesandt wurde und innerhalb der Startbithalbzelle für den **EKP** markiert der **EKP**, dass diese Information von einem **EKP** stammt.

Durch diese Massnahme kann ein Kommunikationspartner **KP** erkennen ob er aktuell **EKP** oder **AKP** ist und damit sinnvoll reagieren:
Empfängt er nämlich das Startbit eines **IKP's** ist er zum **EKP** geworden und antwortet mit dem Startbit eines **EKP**.
Der **AKP** empfängt -per definitionem- den **IKP** nicht, hört damit nur das Startbit des **EKP's** und antwortet damit während der Datenübertragung weder auf den **EKP** noch auf andere Kommunikationspartner (**OKP, SKP, UKP**). Er schützt damit die nun aufgebaute Verbindung des **IKP** zu den **EKP's** vor anderen Stationen, die einen weiteren Informationstransfer versuchen.
Damit ist also auch das "Hidden Terminal Problem" -vorerst nur für den reinen **CSMA**-Verkehr gelöst und so beide Verbindungen voneinander isoliert.

Wieder am Beispiel aus der **Fig. 3** erläutert, ist dort bekanntlich der Kommunikationspartner **KP1** der **AKP**, der nun aufgrund der zwischen den Kommunikationspartnern **KP3** als **IKP** und **KP2** als **EKP** empfangene Antwort jederzeit um die bestehende Verbindung zwischen den beiden Kommunikationspartnern weiss und damit diese nicht stört. Hingegen kann er eine neue, weitere Verbindung zwischen Kommunikationspartner **KP4** als **OKP** und Kommunikationspartner **KP5** als **SKP** dadurch ermöglichen, dass er als **AKP** nicht auf die Verbindung **KP2, KP3** antwortet und auch nicht auf die Verbindung **KP4, KP5** Einfluss nimmt.

Bei der Kodierung der Daten eines **UKP** -siehe diesbezüglich **Fig. 8b-** wird die gleiche zeitliche Rasterung wie sie für die CSMA-Verbindung verwendet wird, gewählt. Die Bitzelle ist dabei in 10 gleiche Kanäle aufgeteilt.
Die Dauer eines solchen Kanales wird als Kanaldauer **T** bezeichnet. Jedes Bit im **UKP-Mode** wird durch einen Impuls der doppelten Kanaldauer, beispielsweise im 1. und 2. Kanal, dargestellt.

Durch die Verdopplung der Pulsdauer kann der Impuls des **UKP-Mode** von anderen Impulsen einer **CSMA-Verbindung** eindeutig differenziert werden. Die gewählte Kodierung der Bits in den entsprechenden Kanälen ermöglicht andererseits empfangseitig, unabhängig vom zeitlichen Auftreten der Übertragung und unabhängig davon ob es sich um eine Verbindung im **CSMA-Mode** oder im **UKP-Mode** handelt, den Inhalt des Informationsflusses eindeutig zu erkennen und zuzuordnen. Das bedeutet, dass bei einer Simultanverbindung, der in seiner zeitlichen Dauer limitierte Informationsfluss abgespeichert und nach Ende einer bestehenden CSMA-Vebindung vom Empfänger nun -entsprechend den CSMA Regeln- in das Netzwerk eingespeist wird.

Wie in nachfolgender Tabelle -als Testlauf **T1**- gezeigt wird, ist durch die zuvor beschriebene Einkodierung der Bits für einen Kommunikationspartner zusammen mit Beachtung der Antwortregeln (siehe dazu S. 11) auch der Spezialfall -bei Vorhandensein eines **UKP's-** für die Lösung des sogenannten "Hidden Terminal Problem" gefunden, dadurch dass ein aufgrund der gewählten Konfiguration jedwelche generierte Startbitkombination eines **EKP** zusammen mit jeder möglichen zeitlichen Lage einer Startkombination eines **UKP** keine Startkombination eines **IKP** zu generieren vermag.

Aus dieser Tabelle ist somit auf einfache Art und Weise ersicht-

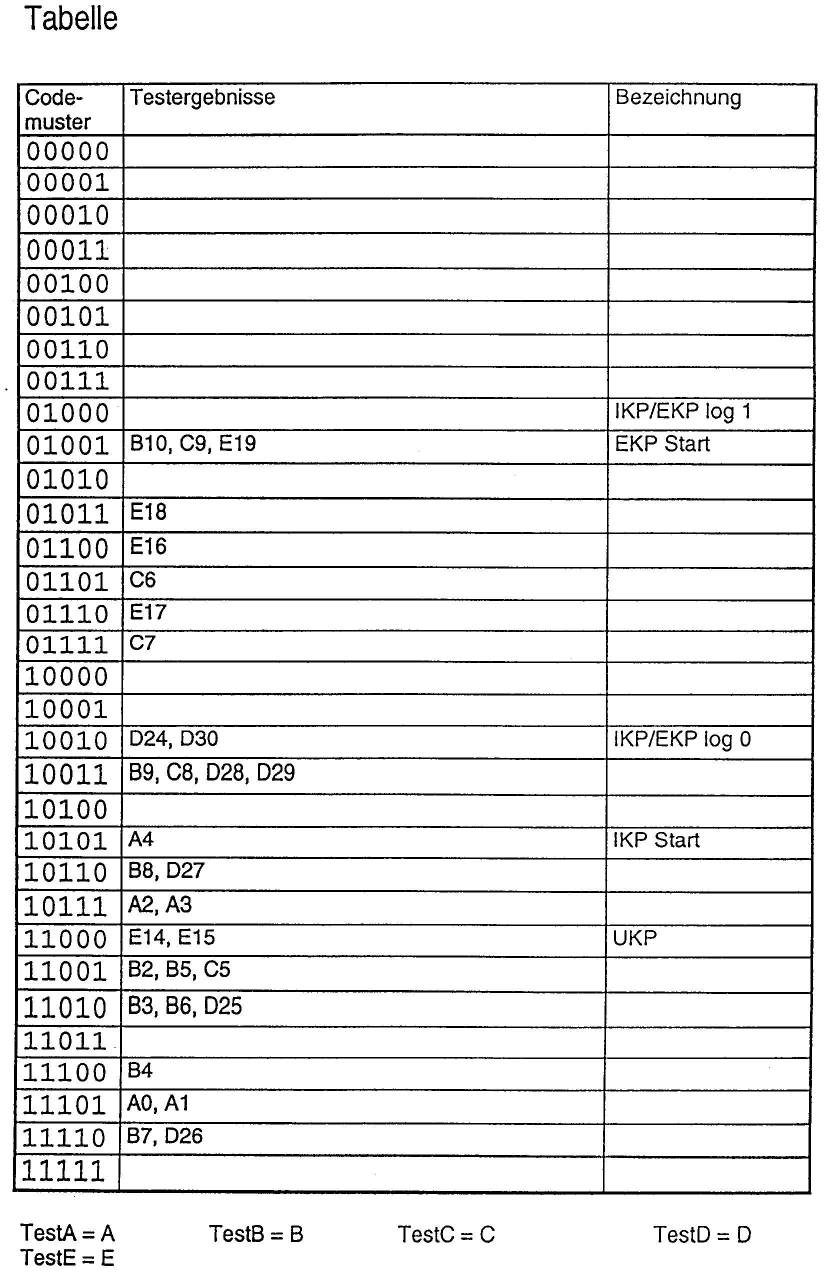

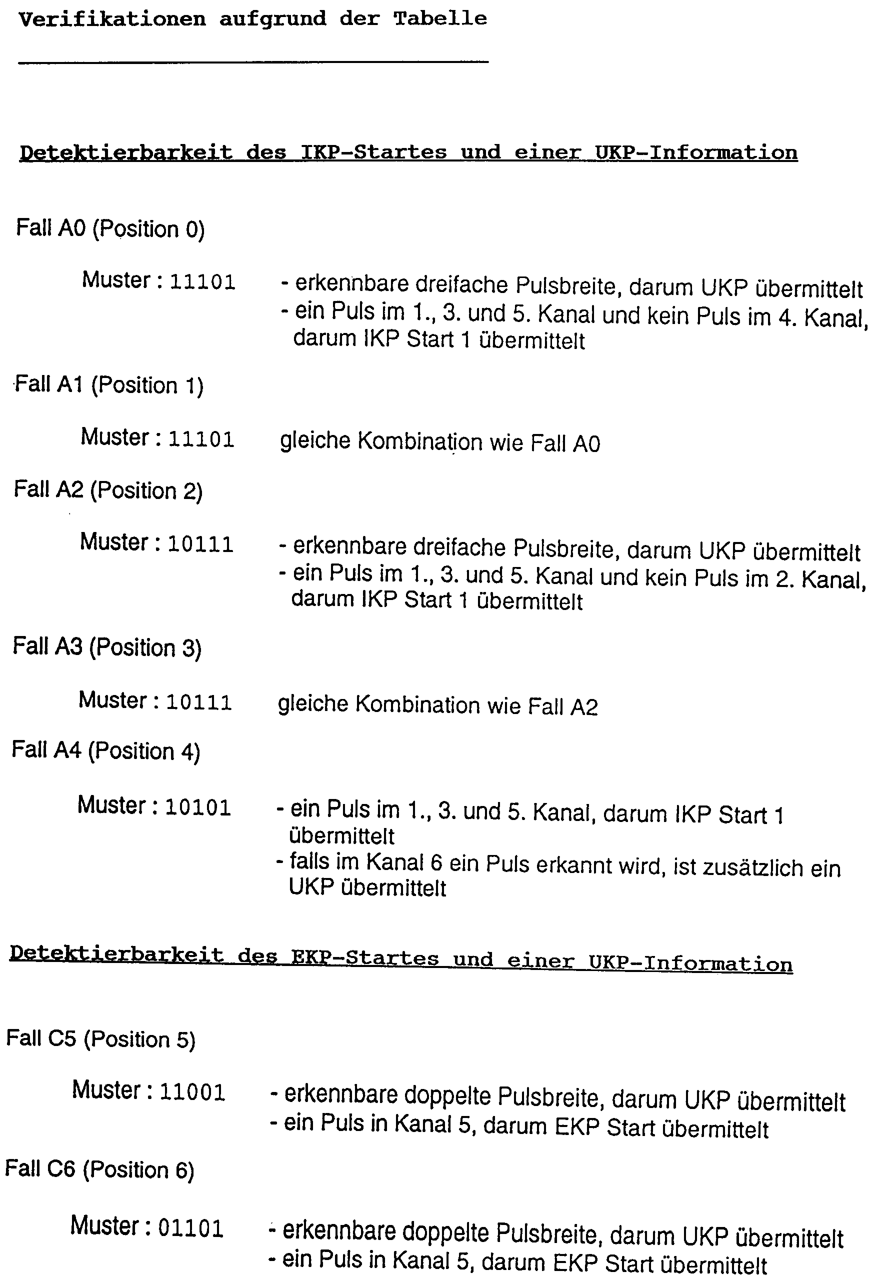

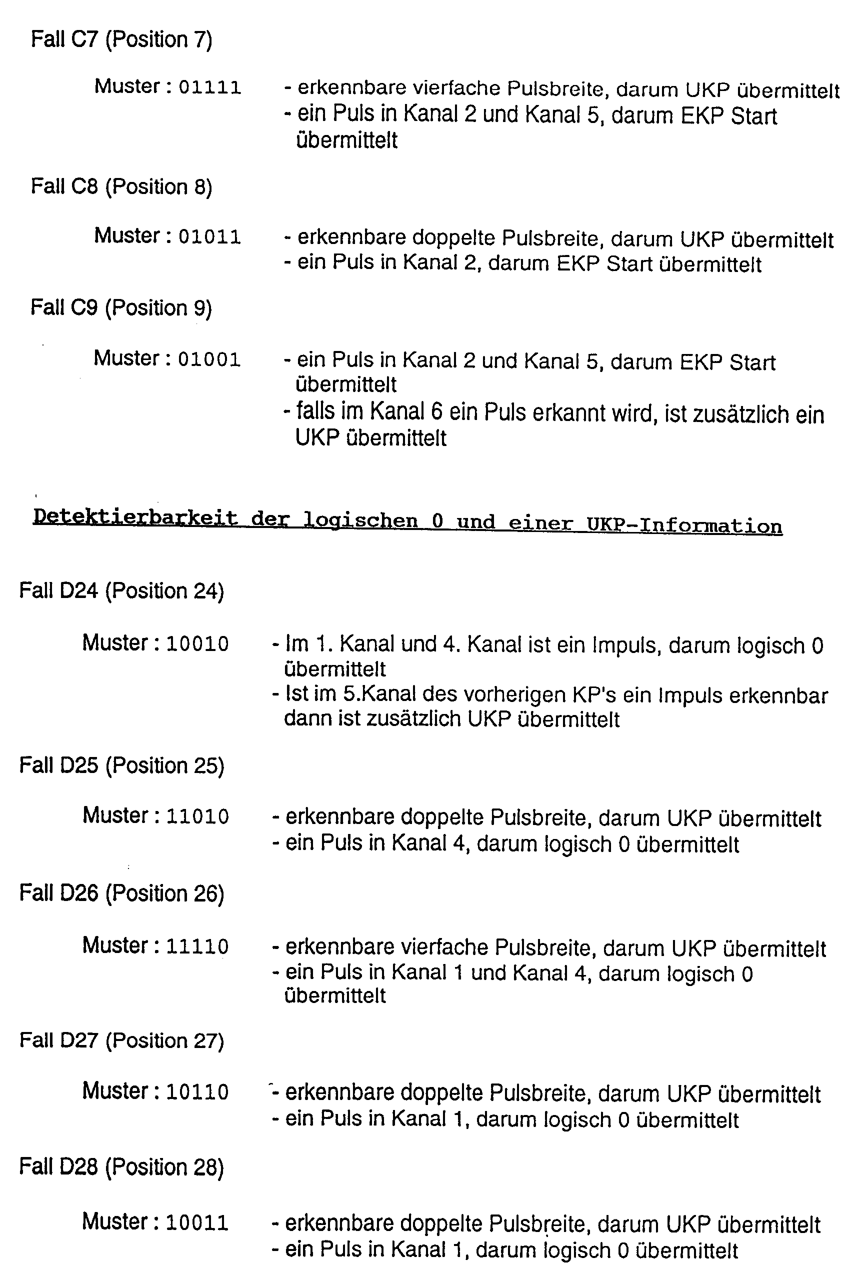

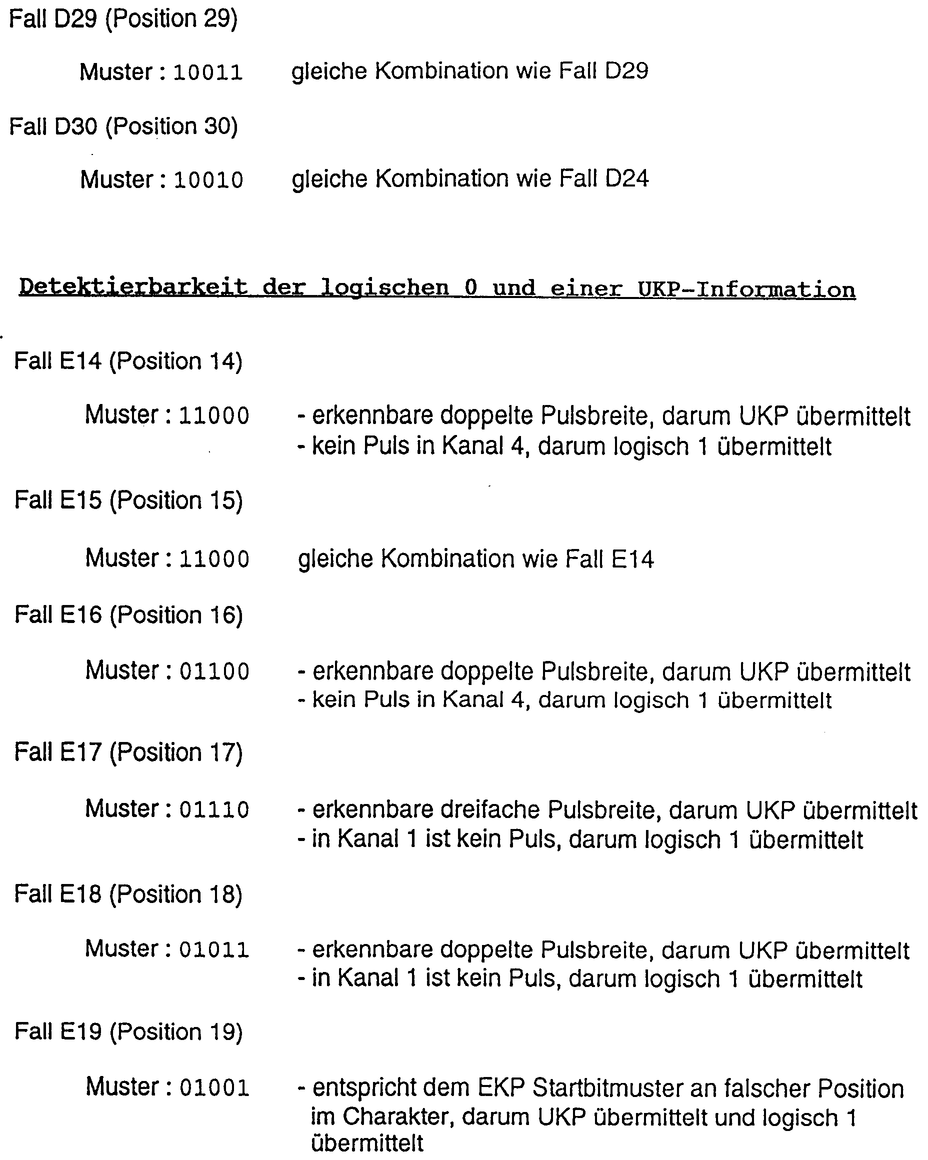

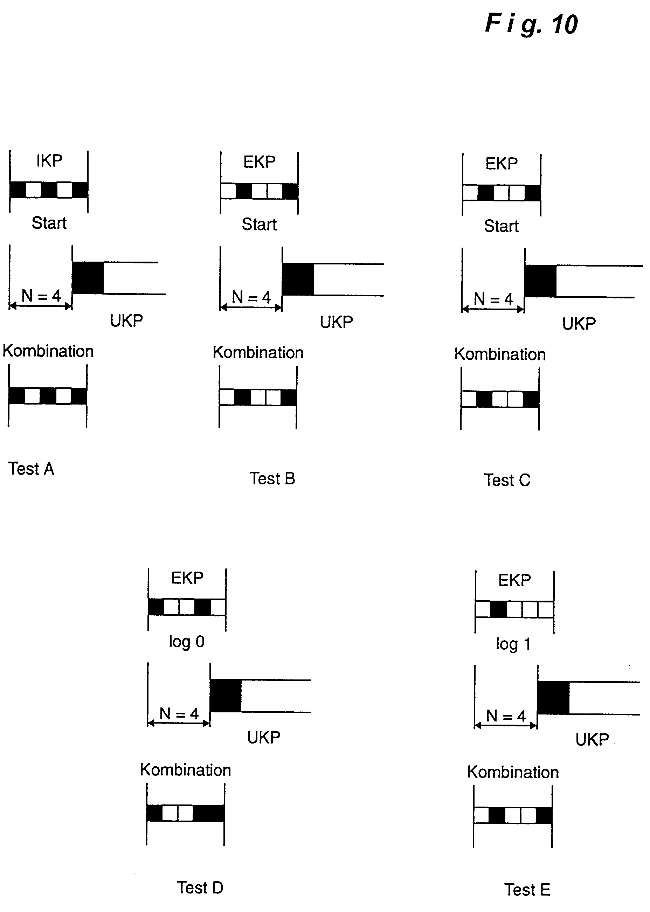

lich, welche Tests eine entsprechende Bitkombination belegen. In der ersten Spalte der Tabelle sind alle 32 Bitmusterkombinationen, welche sich bei der Wahl eines (kleinstmöglichen!) 5-Bit-Codes ergeben, aufgelistet. Eine weitere Spalte beinhaltet die Testergebnisse, die mittels der Test A bis Test E (nachfolgend im Hinblick auf **Fig. 10** beschrieben) eruiert wurden. Die dritte Spalte enthält die entsprechenden Bitmuster.

Ein Testergebnis ist jeweils mit einem Buchstaben und einer Zahl bezeichnet. Der Buchstabe bezeichnet aus welchem Test das Ergebnis stammt (z.B. Buchstabe **A** steht für den Test **A**). Die dabei stehende Zahl bedeutet die Verschiebung **N**, bei welcher der entsprechende Test gestartet wurde.

Mittels der Tabelle ist damit sichergestellt, dass Kombinationen welche sich z.B. aus dem Test **A** ergeben, sich niemals mit Kombinationen welche sich zum Beispiel aus dem Test **B** ergeben, überschneiden. Damit ist bewiesen, dass der Test **B** bezüglich der Kombinationen von Test **A** erfüllt ist.

Der allgemeine Fall für das Lösen des Hidden Terminal Problem verlangt somit nur ein (beliebiges) Echo vom **EKP** um das Medium für alle nicht an der aktuellen Verbindung beteiligten **UKP's** als besetzt zu markieren.

Anderenfalls könnte sich ein **AKP** fälschlicherweise als **EKP** identifizieren, eine *falsche* Antwort generieren und somit die bestehende *echte* Verbindung zwischen **IKP** und **EKP** stören.

Die vorstehende Tabelle und das entsprechende Testblatt mit den fünf Tests **A** bis **E** -siehe **Fig. 10**- beweisen zudem, dass keine möglichen Bitkombinationen zwischen **EKP** und **UKP** erkennbar sind, die sich aus einer anderen vergleichbaren zeitlichen Situation zwischen dem **IKP** und dem **UKP** ergeben könnte. Damit ist eine Verwechslungsgefahr zwischen **IKP** und **EKP** durch einen **AKP** ausgeschlossen.

Die Kombinationstabelle beschreibt, ausgehend von den Definitionen für das Startbit eines **IKP's** die Anzahl Rasterschritte (zeitliche Verschiebungen) des Startbits eines **UKP's** um ein bestimmtes Bitmuster zu generieren.

Folgende fünf Tests müssen erfolgreich sein, um ein arbeitsfähiges System aufzubauen:
**A)** UKP-Startbit um n Rasterschritte zu IKP-Startbit verschoben
   - Test auf:: Detektierbarkeit und Synchronisierbarkeit
**B)** UKP-Startbit um n Rasterschritte zu EKP-Startbit verschoben
   - Test auf:: Entstehende Bitkombination zwischen UKP und EKP darf keine Bitkombination sein, die einer Bitkombination von UKP und IKP entspricht.
**C)** UKP-Startbit um n Rasterschritte zu EKP-Startbit verschoben
   - Test auf:: Detektierbarkeit des EKP Startes und Ableitbarkeit der Existenz des UKP Pulses
**D)** UKP Bit um n Rasterschritte zu EKP **logisch 0 Bit** verschoben
   - Test auf:: Detektierbarkeit der logischen 0 im Zusammenhang mit der logischen 1 und dem UKP Puls
**E)** UKP Bit um n Rasterschritte zu EKP **logisch 1 Bit** verschoben
   - Test auf:: Detektierbarkeit der logischen 1 im Zusammenhang mit der logischen 0 und dem UKP Puls
Es sind nun beim eigentlichen Verfahren noch die Fehlersituationen zu erläutern, die entweder bei gleichzeitigem Auftreten von Empfangsbedarf oder bei fehlerhaftem Empfang eines Bits auftreten können. Diese Situationen sind in den **Figuren 15 und 16** dargestellt und werden ausgehend von dieser Situationsanalyse betrachtet:

**IKP1** und **IKP2** sind im Arbitrationsmode, d.h. wollen gleichzeitig senden. Solange der **UKP** nicht aktiv ist, spiegelt der **EKP** das arbitrierende Bit zurück und derjenige **IKP**, der nicht sein ausgesendetes Bit zurück erhält, stoppt entsprechend den **CSMA**-Regeln die Übertragung. Er hat die Arbitration verloren.

Ist hingegen der **IKP2** nicht in Betrieb, sondern der **UKP** und ist der **IKP1** im Arbitrationsmode und sendet der **UKP** eine Bitkombination aus, während der **EKP** (2.Bithalbzelle) senden will, so erkennt dies der **IKP1** und stoppt die Übertragung, d.h. der **IKP1** hat die Arbitration gegenüber dem **UKP** verloren. Sendet der **UKP** jedoch in einer **IKP** Phase und erkennt dies der **EKP** als eine Simultanübertragung, so fahren beide ungehindert fort.

Eine weitere kritische Situation ist dann gegeben, wenn ein fehlerhaft erkanntes Bit in Gegenwart eines **UKP's** auftritt.

Beispielsweise tritt folgende Situation auf: Ein **IKP** sendet ein Bit aus, das von mehreren **EKP's** empfangen wird. Ein **EKP** versteht trotz redundanter Biteinkodierung von logisch 0 und logisch 1 ein Bit falsch. Damit sendet er dieses falsche Bit in der zweiten **EKP** Bithalbzelle zusammen mit den korrekten **EKP** Antworten zurück. Daraus resultiert eine Bitkombination **11010**, die nun vom **IKP** als Fehler verstanden werden kann oder aber als **UKP** Bit oder in der Arbitrationsphase als Zweideutigkeit.

Während der Arbitrationsphase kann hier gestoppt werden. Diese Kombination kann durch einen **UKP** entstanden sein. Die entsprechende Information geht in diesem Fall, selbst wenn der **IKP** gestoppt wird, nicht verloren, da der **IKP** nun dieses Bit als **UKP** Bit speichert und diesen Fehler erst dann erkennt, wenn zum nachst möglichen Zeitpunkt ein weiteres erwartetes Bit des **UKP'**s nicht erscheint. In diesem Fall wird der **IKP** mit der Neuübertragung beginnen. Ansonsten wartet er bis die **UKP** Information übermittelt ist. Der **EKP** seinerseits wird jetzt nur noch den **UKP** empfangen und er löscht deshalb die angefangene **CSMA**-Verbindung.

Es wird also erkannt, wenn
- eine **CSMA** Verbindung existiert und tatsächlich ein Fehler auftritt
- eine **CSMA** Verbindung existiert und eine **UKP** Übermittlung existiert
- eine **CSMA** Verbindung existiert und eine **UKP** Übermittlung einsetzt
Ein Fehler wird erkannt, wenn einerseits das Muster von **EKP Bitmuster** erscheint und andererseits existiert noch eine **UKP** Verbindung oder aber es existiert eine **UKP** Verbindung, aber der Impuls wird nicht zu diesem Zeitpunkt erwartet.

Ein Fehler wird sofort erkannt, wenn der **IKP** eine logisch 1 sendet und das Bitmuster **11010** in der Bithalbzelle erscheint. Aufgrund des Bits im 4. Kanal und der Pause im 3. Kanal kann eindeutig auf einen Fehler in der CSMA Übertragung geschlossen werden. (Es wird eine logische 0 mit überlagertem **UKP** Signal zurückgemeldet anstatt der erwarteten logischen 1 mit oder ohne **UKP** Signal)

Sendet der **IKP** hingegen eine logisch 0 und es erscheint die Bitkombination **11010** in der **EKP** Bithalbzelle, so wird dies als Echo logisch 0 mit überlagertem **UKP** Bit interpretiert und ein möglicher **CSMA** Fehler ist noch nicht erkennbar. Eine **UKP** Kommunikation startet und erst beim nächstmöglichen Bit des **UKP's** wird ein Fehler der **CSMA** Verbindung definitiv erkannt. Daraufhin wird der **UKP** Kanal gelöscht. Die **CSMA** Verbindung wird weitergeführt, da ja mindestens ein **EKP** die richtige Information erhalten hat. Der andere **EKP** hat eine Korrekturmöglichkeit aufgrund des Paritybits und der redundanten logisch 1 und logisch 0.

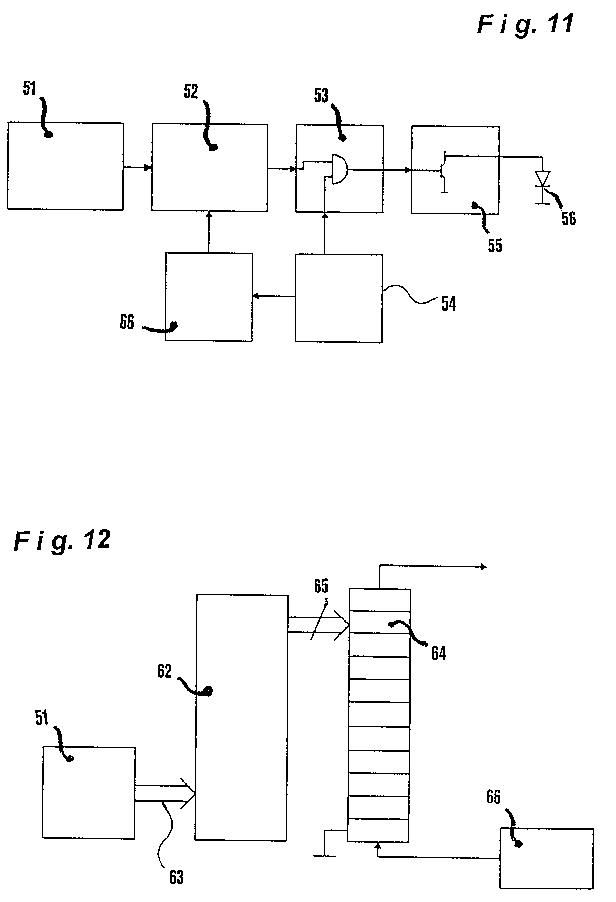

Gemäss **Fig. 11** besteht eine Einrichtung (Station) für einen unidirektionale Kommunikationspartner **KP** aus einer Tastatur (Keyboard) **51**, einem mit dieser verbundenen Message Generator **52**, einem am Message Generator **52** angeschlossenen Modulator **53**, einem mit diesem verbundenen Oszillator **54** und einem am Ausgang des Modulators **53** vorgesehene Treiberstufe **55** zur Ansteuerung einer LED-Diode **56**.

Bei Knopfdruck auf der Tastatur **51** (oder andersartig ausgelöst), wird entweder der Messagenerator **52** aktiviert, der eine geeignete Bitsequenz generiert, oder im einfachsten Fall -siehe dazu **Fig. 12-**, werden Adressen eines Festwertspeichers **62** adressiert und in Abhängigkeit davon Informationen, welche aus auszusendenden Daten bestehen über einen Datenkanal **63** parallel in ein erstes Schieberegister **64** geladen und seriell über einen weiteren Datenkanal **65** zum Modulator hin, ausgelesen. Die entsprechende Zeitsteuerung wird von einem mit dem Schieberegister **64** verbundenen Frequenzteiler **66** bewirkt.

Der Frequenzteiler **66** stellt ebenfalls die Zeitbasis für den Oszillator **54** zum Auslesen der seriellen Information her. Die ausgelesenen Daten werden -wie erwähnt- zum Modulator **53** geführt, der während einer Schieberegister Taktphase das Aussenden der Oszillatorfrequenz ermöglicht und so den Pulsburst generiert. Dieser wird in der Treiberstufe **55** verstärkt und an die lichtaussendende Diode **56** weitergegeben.

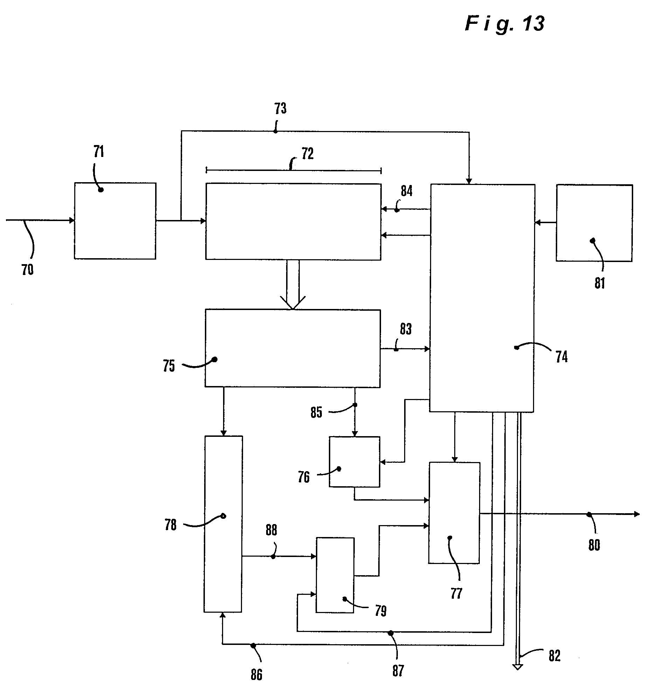

In **Fig. 13** ist eine erfindungsgemässe Empfangseinrichtung mit Dekodierteil (der Übersichtlichkeithalber wurde die Sendeeinrichtung, die jeder Empfangseinrichtung inherent angehört, nicht gezeichnet) dargestellt.
Dabei ist ein Demodulator **71** vorgesehen, dem ein Eingangssignal **70** zugeführt wird, welches beispielsweise ein mit Pulsburst moduliertes Signal einer Infrarot Empfangsdiode oder eines Funkempfängers darstellt. Dieses Eingangssignal wird vom Demodulator **71** so demoduliert, dass am Ausgang ein reines Pulspositions- bzw. Pulsbreitenmoduliertes Signal zur Verfügung steht.
Der Demodulator **71** ist mit einem zweiten (Serie/in-Parallel/out)-Schieberegister **72** und über eine weitere Leitung **73** mit einem Eingang einer Steuerschaltung **74** verbunden, auf den gegebenenfalls ein eintreffendes Startbit übertragbar ist. Auf eine steigende Flanke eines Startbits startet die Steuerschaltung **74** eine Zeitbasis **81** und taktet die **10** Kanäle einer Bitzellendauer (**IKP**- und **EKP-Teil**) über einen aus der Steuerschaltung **74** empfangenen Clock **84** in das zweite Schieberegister **72**. Diese Kanäle liegen alsdann an einem mit dem Schieberegister **72** verbundenen Dekoder **75**, der eine rein kombinatorische Schaltung beinhaltet, an. Entsprechend den vorbekannten Kodierungsregeln kann der Dekoder **75** entscheiden, ob ein Bit im **CSMA-Mode**, im **UKP-Mode** oder im Simultanverkehr empfangen wird und welches/welche Bit(s) empfangen wurde(n). Nach dem Empfang einer ganzen Bitzelle wird ein zum **CSMA**-Verkehr gehörendes Bit durch die Steuerschaltung **74** in einen über eine weitere Leitung **85** mit einem Ausgang des Dekoders **75** verbundenen Daten-Haltespeicher (Data Latch) **76** eingelesen und ein mit dem Daten-Haltespeicher **76** verbundener (2:1) Multiplexer **77** so durch die Steuerschaltung **74** durchgeschaltet, dass dieses Bit am Empfängerausgang **80** zur Verfügung steht.

Handelt es sich bei der empfangenen Information um solche aus einem unidirektionalen Datenfluss, so generiert die Steuerschaltung **74** zum Einlesen der entsprechenden Bit ein Taktsignal für ein drittes Schieberegister (Seriell/in-Parallel/out) **78**. Die Steuerschaltung **74** zählt im weiteren die empfangenen Bits dieses Datenflusses, um über eine Leitung **87** nach Beendigung des **CSMA-Verkehrs** eine mit dem dritten Schiebregister **78** verbundenen Addierschaltung **79** so anzusteuern, dass keine ungültige Information über den Multiplexer **77** auf den Empfänger-Ausgang **80** geschickt wird.

Nach Beendigung des **CSMA-Verkehrs** wird über die (hier der Übersichtlichkeithalber nicht dargestellte) Sende-Einrichtung eine dummy Information zu den im Kommunikationsnetz vorhandenen **KP's** geschickt, um die Neuaufnahme eines **CSMA-Verkehrs** zu verhindern. Gleichzeitig generiert die Steuereinrichtung **74** über eine Leitung **86** ein Taktsignal und schaltet damit den Multiplexer **77** und die Addierschaltung **79** ein, um das unidirektionale Signal zum Empfänger-Ausgang **80** zu schicken. Nach Beendigung der Übertragung wird automatisch wieder auf Empfang umgeschaltet und damit die Aussendung eines dummy Signals unterbunden.
Über eine Kontrolleitung **82** wird zusätzlich von der Steuerschaltung **74** ein Signal zum Sender und Empfänger übermittelt.

Es wäre eine Alternative für den so erneut anfallenden **CSMA-Verkehr** einen Empfangsbuffer vorzusehen. Da jedoch die maximale Länge eines CSMA-Mode Informationsflusses nicht vorhersehbar ist, erscheint es logischer, den CSMA-Verkehr kurz zu Blockieren und den unidirektionalen Informationsfluss zu übertragen.

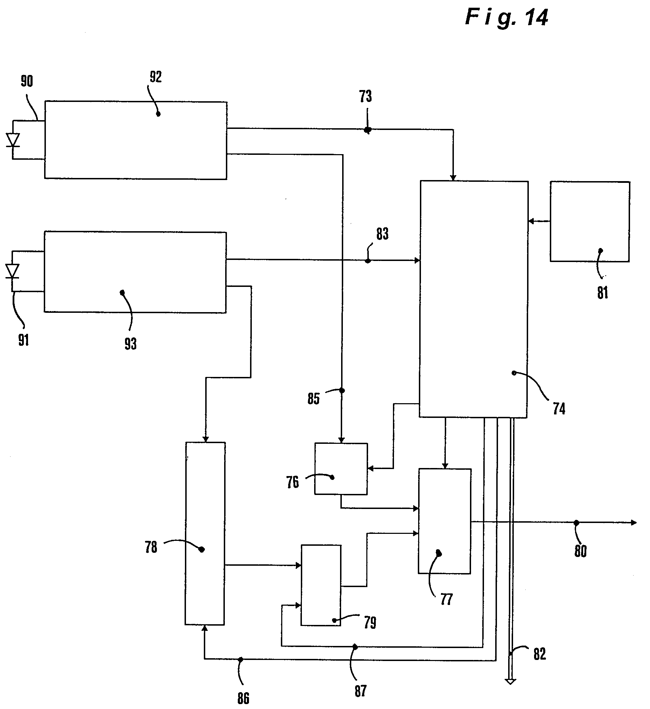

Eine Variante einer solchen in **Fig. 13** gezeigten Ausführungsform ist in **Fig. 14** dargestellt. (Der Übersichtlichkeithalber sind dort die Bezugszeichen beibehalten worden, die die gleiche Bedeutung haben, wie in Fig. 13). Verschieden ist damit nur die Eingangsstufe. Bei der hier dargestellten Schaltung sind ein erster und ein zweiter Empfänger **92** und **93** vorgesehen, die über jeweils einen ersten Eingangsdiskriminator **90** oder einen zweiten Eingangsdiskriminator **91** ansteuerbar sind und bei der somit der erste Empfänger **92** den **CSMA**-Verkehr empfängt und der zweite Empfänger für den **UKP**-Verkehr vorgesehen ist. Dadurch entfallen natürlich die Dekodierung und Entschlüsselung, da die Signale getrennt verarbeitet werden.

Übrigens ist als Alternative vorgesehen, beim Weiterleiten der **UKP**-Information (**TP - twisted pair**) den IR-Kanal nicht mit einer dummy Information zu belegen, sondern man sendet sofort die Wiederholung der UKP-Informationen auf dem **CSMA-IR-Kanal**.
Dies ermöglicht allen anderen Stationen, welche ebenfalls die **UKP** Informationen mitgehört haben, die **UKP** Informationen in ihren jeweiligen Buffern zu löschen (...weil sie davon ausgehen können, dass die Information von der Station, welche die Wiederholung sendet, auf **TP** geleitet wird!).

## Patentansprüche

1. Verfahren zur Informationsübertragung, wobei die Informationsübertragung zwischen Kommunikationspartnern durchgeführt wird, die je wenigstens einen Sender aufweisen, und wobei die Informationen bitseriell übertragen werden und die Richtung der Informationsflüsse teilweise umschaltbar ist,
**dadurch gekennzeichnet**, dass
- ein bidirektional funktionierender Kommunikationspartner (**KP**), der Übermittlungsbedarf hat, sich vor dem Senden als iniziierender Kommunikationspartner (**IKP**) kennzeichnet,
- ein weiterer bidirektionaler im Überlappungsbereich des Senders liegender Kommunikationspartner (**KP**), der keinen Übermittlungsbedarf hat, sich beim Empfang als empfangender Kommunikationspartner (**EKP**) kennzeichnet,
- der iniziierende bidirektional arbeitende Kommunikationspartner (**IKP**) zu Beginn der Informationsübertragung ein seine Kennzeichnung ausdrückende Information aussendet und eine bestimmte Zeit abwartet,
- der empfangende Kommunikationspartner (**EKP**) während einer bestimmten Zeit nach dem Empfang der Information vom sendenden Kommunikationspartner (**IKP**) ein Echo zurücksendet,
- weitere bidirektional funktionierende, nicht im Überlappungsbereich des Senders aber in demjenigenen des empfangenden Kommunikationspartner (**EKP**) liegende Kommunikationspartner (**KP**) sich aufgrund des Echos des empfangenden Kommunikationspartners (**EKP**) als mithörender, antwort-empfangender Kommunikationspartner (**AKP**) kennzeichnet und Mittel aufweist, die bewirken, dass die iniziierte Informationsübertragung zwischen dem sendenden Kommunikationspartner (**IKP**) und dem empfangenden Kommunikationspartner (**EKP**) nicht gestört wird.

2. Verfahren nach Anspruch **1**,
**dadurch gekennzeichnet**, dass
- die die Kennzeichnung ausdrückende Information ein Startbitmuster ist,
- das Echo eine vom empfangenden Kommunikationspartner (**EKP**) gesendete, bit- oder byteweise aufgebaute Information ist, aus der jeder antwort-empfangender Kommunikationspartner (**AKP**) in der Lage ist eine laufenden **CSMA-Verkehrs** (**IKP**-**EKP**) zu erkennen.

3. Verfahren nach Anspruch **1**,
**dadurch gekennzeichnet**, dass
vom empfangenden Kommunikationspartner (**EKP**) gesendetes Echo beziehungsweise Information mit Ausnahme der seine Kennzeichnung enthaltende Information der empfangenden Information derart entspricht, dass damit vom initiierenden Kommunikationspartner (**IKP**) eine Arbitration nach dem **CSMA**-Protokoll durchgeführt werden kann.

4. Verfahren nach Anspruch **1**,
**dadurch gekennzeichnet**, dass
- der iniziierende bidirektional arbeitende Kommunikationspartner (**IKP**) nach jeder ersten gesendeten Bithalbzelle (Information) eine zweite Bithalbzelle vom empfangenden Kommunikationspartner (**EKP**) zurückerwartet,
- der empfangende Kommunikationspartner (**EKP**) und der antwort-empfangende Kommunikationspartner (**AKP**) gleichzeitig, wie auch der sendende Kommunikationspartner selbst -während der Informationsübermittlung zwischen sendendem Kommunikationspartner (**IKP**) und empfangendem Kommunikationspartner (**EKP**) in der Lage sind, eine durch nur sendende unidirektional arbeitende Kommunikationspartner (**UKP**) übermittelte Information bestimmter Länge zu speichern und nach Beendigung der iniziierten Information weiterzuverarbeiten und/oder weiterzuleiten.

5. Verfahren nach Anspruch **1**,
**dadurch gekennzeichnet**, dass
- die Wahl der Bitmuster für undirektionalen Verkehr (**UKP-Mode**) und bidirektionalen Verkehr (**CSMA-Mode**), so erfolgt, dass das Erscheinen eines Bitmusters von einem unidirektionalen Kommunikationspartner (**UKP**) zu einem beliebigen Zeitpunkt innerhalb einer **CSMA**-Übertragung erkannt werden kann und die beiden Informationsflüsse beim Simultanverkehr separiert werden können.

6. Verfahren nach Anspruch **5**,
**dadurch gekennzeichnet**, dass
- die Wahl der Bitmuster für undirektionalen Verkehr (**UKP-Mode**) und bidirektionalen Verkehr (**CSMA-Mode**), so erfolgt, dass keine (**IKP/UKP**) Startbitmuster, die durch unterschiedliche zeitliche Positionen des **UKP** Pulses in bezug auf den **IKP** Puls enstehen könnten, sich durch ein **UKP** Puls in bezug **EKP** Puls ergeben.

7. Verfahren nach Anspruch **5**,
**dadurch gekennzeichnet**, dass
- die Wahl der Bitmuster für undirektionalen Verkehr (**UKP-Mode**) und bidirektionalen Verkehr (**CSMA-Mode**), so erfolgt, dass weder eine Kombination von **UKP** Puls mit **EKP** Puls als logisch 1 noch eine Kombination von **UKP** Puls mit **EKP** Puls als logisch 0 eine Startkombination eines **IKP** Bitmusters ausmacht.

8. Verfahren nach Anspruch **1**,
**dadurch gekennzeichnet**, dass
die Bits in Bitzellen bestehend aus in einer vorbestimmten Anzahl Kanälen übermittelt und das Bit durch einen Satz von Impulsen oder Impulspaketen in diesen Kanälen repräsentiert wird.

9. Verfahren nach Anspruch **8**,
**dadurch gekennzeichnet**, dass
jede Bitzelle aus 10 Kanälen gebildet ist und zwei Bithalbzellen umfasst.

10. Verfahren nach Anspruch **1**,
**dadurch gekennzeichnet**, dass
das Bitmuster für den **CSMA-Verkehr** nie zwei aufeinanderfolgende Kanäle verwendet, während das Bitmuster für die Darstellung eins Bits im **UKP Mode** immer zwei aufeinanderfolgende Kanäle belegt.

11. Verfahren nach Anspruch **7**,
**dadurch gekennzeichnet**, dass
die Wahl der Bitmuster so erfolgt, dass sowohl die logisch 1, wie auch die logisch 0 Information des **EKP**- und/oder **IKP**-Pulses beim einmaligen Auftreten eines **UKP**-Pulses getrennt werden und somit die jeweils übermittelte Information unmittelbar zur Verfügung steht.

12. Verfahren nach Anspruch **6**,
**dadurch gekennzeichnet**, dass
- im **CSMA-Mode** ein Startbit für den **IKP** durch einen Impuls oder ein Impulspaket in den Kanälen 1, 3, und 5,
- im **CSMA-Mode** ein Startbit für den **EKP** durch einen Impuls oder ein Impulspaket in den Kanälen 2 und 5,
- im **UKP-Mode** ein Startbit durch einen Impuls oder ein Impulspaket in den Kanälen 1 und 2,
- im **CSMA-Mode** eine Kennzeichnung einer logisch "1" beim Senden durch einen iniziierenden Kommunikationspartner (**IKP**), wie auch beim Senden durch einen empfangenden Kommunikationspartner (**EKP**) durch einen Impuls oder ein Impulspaket im Kanal 2,
- im **UKP-Mode** eine Kennzeichnung einer logisch "1" durch einen Impuls oder ein Impulspaket in den Kanälen 1 und 2
- im **CSMA-Mode** eine Kennzeichnung einer logisch "0" beim Senden durch einen iniziierenden Kommunikationspartner (**IKP**), wie auch beim Senden durch einen empfangenden Kommunikationspartner (**EKP**) durch einen Impuls oder ein Impulspaket in den Kanälen 1 und 4,
- im **UKP-Mode** eine Kennzeichnung einer logisch "0" durch einen Impuls oder ein Impulspaket in den Kanälen 4 und 5,
gebildet wird.

13. Einrichtung zur Durchführung des Verfahrens nach Anspruch **1**, wobei mindestens drei Kommunikationspartner (**KP1, KP2, KP3**) vorhanden sind, die je einen Sender und einen Empfänger aufweisen und wenigstens ein Kommunikationspartner (**KP4**), der ausschliesslich einen Sender aufweist, vorhanden sind
**dadurch gekennzeichnet**, dass
- die Einrichtung zur seriellen Übertragung zweier zueinander asynchronen Informationsflüssen geeignet ist,
- Information von den Sender und Empfänger aufweisenden Kommunikationspartnern direkt weiterleitbar ist,
- Information von einem ausschliesslich Sender aufweisenden Kommunikationspartner (**KP4**) in einem Speicher zwischenspeicherbar und nach der Beendigung einer **CSMA** Übertragung aus diesem Speicher auslesbar und weiterleitbar, ist.

14. Einrichtung nach Anspruch **13**,
**dadurch gekennzeichnet**, dass
die zwei asynchronen Informationsflüsse, der **CSMA** Informationsfluss und der **UKP** Informationsfluss, zeitkodiert übermittelbar und via einer 'seriell ein/parallel aus' Schieberegisteranordnung (**72**) und einem Dekoder (**75**) trennbar sind.

15. Einrichtung nach Anspruch **13**,
**dadurch gekennzeichnet**, dass
- der Empfänger einen Demodulator (**71**) umfasst, dessem Eingang ein Eingangssignal (**70**) eines sendenden Kommunikationspartners (**KP1, KP2, KP3, KP4**) zuführbar ist,
- der Ausgang dieses Demodulators (**71**) einerseits mit einem Eingang des zweiten Schieberegisters (**72**) und andererseits mit einem Eingang einer Steuereinrichtung (**74**) verbunden ist,
- das zweite Schieberegister (**72**) mit dem Eingang des Dekoders (**75**) und dessen Ausgang einerseits mit einen dritten Schieberegister (**78**) und andererseits mit einem Daten-Haltespeicher (**76**) verbunden ist,
- der Ausgang des dritten Schieberegisters (**78**) über eine Logisch-Und-Schaltung (**79**) geführt, zusammen mit dem Ausgang des Daten-Haltespeichers (**76**) den Eingang eines Multiplexers (**77**) bildet,
- der Ausgang dieses Multiplexers (**77**) dem eigentlichen Empfänger (**80**) zuführbar ist.

16. Einrichtung nach Anspruch **15**,
**dadurch gekennzeichnet**, dass
Ausgänge der Steuereinrichtung (**74**) mit dem zweiten Schieberegister (**72**), dem Daten-Haltespeicher (**76**), dem Multiplexer **77**) und der Logisch-Und-Schaltung (**79**), dem dritten Schieberegister (**78**) und dem Sender und Empfänger verbunden sind.

17. Einrichtung nach Anspruch **16**,
**dadurch gekennzeichnet**, dass
die Steuerschaltung (**74**) so konzipiert ist, dass die steigende Flanke eines Startbits den Takt für die Bitzellenansteuerung auslöst.

18. Einrichtung nach Anspruch **13**,
**dadurch gekennzeichnet**, dass
das Eingangssignal (**70**) ein pulsburstmoduliertes Bitmuster ist.

19. Einrichtung nach Anspruch **13**,
**dadurch gekennzeichnet**, dass
die beiden zueinander asynchronen Informationsflüsse, der **CSMA** Informationsfluss und der **UKP** Informationsfluss, über getrennte Empfangseinrichtungen übermittel- und empfangbar sind.

20. Einrichtung nach Anspruch **19**,
**dadurch gekennzeichnet**, dass
- der Empfänger einen ersten Empfänger (**92**) und einen zweiten Empfänger (**93**) umfasst, die über einen ersten Eingangsdiskriminator (**90**) und einen zweiten Eingangsdiskriminator (**91**) ansteuerbar sind,
- der erste Empfänger (**92**) über eine Leitung (**85**) mit einem Daten-Haltespeicher (**76**) und der zweite Empfänger (**93**) mit einem Schieberegister (**78**) verbunden ist,
- der Ausgang des dritten Schieberegisters (**78**) über eine Logisch-Und-Schaltung (**79**) geführt, zusammen mit dem Ausgang des Daten-Haltespeichers (**76**) den Eingang eines Multiplexers (**77**) bildet,
- der Ausgang dieses Multiplexers (**77**) dem eigentlichen Empfänger (**80**) zuführbar ist.
